Europäisches Patentamt

(19) European Patent Office

Office européen des brevets

(11) Numéro de publication: **0 195 709**
**B1**

# (12) FASCICULE DE BREVET EUROPEEN

(45) Date de publication du fascicule du brevet:
08.11.89

(51) Int. Cl.⁴: **H 03 H 17/06,** G 06 F 1/02

(21) Numéro de dépôt: **86400493.2**

(22) Date de dépôt: **10.03.86**

(54) Générateur numérique de forme d'onde et procédé associé.

(30) Priorité: **22.03.85 FR 8504252**

(43) Date de publication de la demande:
**24.09.86 Bulletin 86/39**

(45) Mention de la délivrance du brevet:
**08.11.89 Bulletin 89/45**

(84) Etats contractants désignés:
**DE FR NL**

(56) Documents cités:
**FR-A- 2 153 149**
**GB-A- 1 153 839**
**US-A- 4 472 785**

**IEEE TRANSACTIONS ON AUDIO AND ELECTROACOUSTICS, vol. AU-20, no. 1, mars 1972, pages 90-93, IEEE, New York, US; S.A. WHITE: "A slow approach to mechanizing a fast digital interpolation filter"**
**ICASSP 84 - PROCEEDINGS OF THE IEEE INTERNATIONAL CONFERENCE ON ACOUSTICS, SPEECH, AND SIGNAL PROCESSING, San Diego, California, US, 19 - 21 mars 1984, vol. 3, IEEE, New York, US; B. HIROSAKI et al.: "A CMOS-VLSI rate conversion digital filter for digital audio signal processing"**

(73) Titulaire: **SCHLUMBERGER INDUSTRIES, 50, avenue Jean Jaurès, F-92120 Montrouge (FR)**

(72) Inventeur: **Benkara, Ferial, 16, rue des Buttes, F-92220 Bagneux (FR)**

(74) Mandataire: **Holt, Michael, Schlumberger Measurement and Systems Limited 124 Victoria Road, Farnborough, Hampshire GU14 7PW (GB)**

## Description

La présente invention concerne un procédé et un dispositif pour produire, à partir d'une série de N valeurs numériques représentant des paliers successifs d'une forme d'onde numérique virtuelle, et dans une bande de fréquence limitée par une fréquence maximale $F_M$, une forme d'onde analogique réelle dont l'amplitude au cours du temps corresponde au moins approximativement à celle qu'aurait la forme d'onde virtuelle défilant à une fréquence de défilement $F_d$ donnée.

Des dispositifs de ce type sont connus dans le domaine de la télédiffusion, et utilisés notamment pour l'émission de signaux auxiliaires, tels que des signaux de diffusion de données.

On sait en effet que la télévision est, dans de nombreux pays, utilisée non seulement pour transmettre des informations audio-visuelles correspondant à sa fonction première, mais également des informations numériques d'intérêt collectif; en France par exemple, le procédé connu sous le nom «ANTIOPE» permet la diffusion de données numériques, telles que les cours de la Bourse, accessibles à tout terminal informatique approprié branché sur un récepteur de télévision.

Dans le cas de ces signaux de diffusion de données, les signaux physiquement transmis sont des formes d'ondes analogiques destinées à représenter des valeurs successives numériques binaires, c'est-à-dire constituées chacune d'un bit 0 ou d'un bit 1.

On peut ainsi, de façon un peu arbitraire mais commode, considérer que le message à émettre, formé de N valeurs numériques binaires, constitue une forme d'onde numérique virtuelle qui est, à la transmission, concrétisée en une forme d'onde analogique réelle.

Alors que la première n'est définie que par des valeurs numériques ordonnées, la seconde est définie par un ensemble de paramètres physiques.

En particulier, dans le cas de la génération de tels signaux de diffusion de données pour la télévision, l'émetteur est conditionné par deux paramètres qui sont d'une part la fréquence de défilement $F_d$ de la forme d'onde numérique virtuelle à laquelle le signal physiquement émis (c'est-à-dire la forme d'onde analogique) doit correspondre, et d'autre part la fréquence maximale $F_M$ présente dans le signal émis, c'est-à-dire la plus haute fréquence d'amplitude significative du spectre de la forme d'onde analogique.

Traditionnellement, les générateurs de signaux de diffusion de données comprennent des moyens pour relire, à une fréquence de défilement (qu'on pourrait appeler une fréquence-bit) déterminée par un oscillateur, et sous forme de signaux électriques à haut niveau (pour les bits 1) ou à bas niveau (pour les bits 0), les valeurs numériques binaires de diffusion de données, et un filtre passe-bas analogique recevant ces signaux et produisant une forme d'onde analogique dont la fréquence maximale est limitée à une valeur $F_M$ déterminée par la fréquence de coupure du filtre.

Cependant, bien que limitée à une bande de fréquence déterminée, la forme d'onde analogique émise doit être reconnue, au récepteur, comme porteuse de l'information numérique constituée par les valeurs binaires qui ont servi à la constituer.

Pour cela il est nécessaire, d'après le théorème de Shannon, que la fréquence maximale $F_M$ de la forme d'onde analogique soit au moins égale au double de la fréquence de défilement $F_d$ des valeurs numériques binaires (fréquence-bit).

Il en résulte que, dans les générateurs connus de signaux de diffusion de données, dans lesquels la fréquence maximale est déterminée une fois pour toutes par les caractéristiques physiques du filtre analogique de sortie, la fréquence de défilement ne peut pas être modifiée à souhait, non seulement parce qu'elle est elle-même physiquement déterminée par un oscillateur, mais aussi parce que la fréquence maximale à laquelle elle est liée ne peut être changée sans modification physique du filtre analogique de sortie.

Ces limitations constituent un obstacle à la nécessité de pouvoir s'adapter aux normes et besoins nouveaux et de transmettre des signaux de diffusion de données à des fréquences de défilement réglables.

On sait d'autre part que la télédiffusion utilise comme signaux auxiliaires, en plus des signaux numériques de diffusion de données, des signaux test (ou «lignes de test») destinés à mesurer la qualité de la transmission, télévisée.

En effet, en raison de la dimension mondiale qu'ont prise à l'heure actuelle les émissions télévisées, des normes internationales ont été établies pour le contrôle de la qualité des transmissions.

Ce contrôle est réalisé en émettant, en plus des informations audio-visuelles destinées au public, des signaux de test prédéterminées, définis par des normes et émis dans une bande de fréquence déterminée.

L'observation, effectuée au niveau des récepteurs centralisés de télévision, des déformations subies par les signaux de test reçus, permet d'apprécier la qualité de la transmission.

A l'heure actuelle, ces signaux de test, de nature analogique, sont produits par des générateurs spécifiques, différents des générateurs de signaux de diffusion de données, ce qui conduit à la nécessité d'utiliser un matériel considérable pour la génération des signaux auxiliaires de télévision.

Dans de contexte, l'invention a pour but de proposer, pour des applications d'ailleurs non limitées à l'émission de signaux de test de télévision, des moyens permettant de synthétiser, à partir des valeurs numériques d'une forme d'onde virtuelle, utilisées à une fréquence de défilement $F_d$, une forme d'onde analogique présentant une fréquence maximale $F_M$, tout en choisissant la fréquence de défilement et la fréquence maximale de cette onde analogique.

A cette fin le procédé de l'invention qui, appliqué à la télévision permet aussi bien la synthèse des signaux de diffusion de données que des signaux de test, est caractérisé en ce qu'il comprend:

– une opération préliminaire d'échantillonnage consistant à produire des échantillons numériques d'entrée, représentatifs de l'amplitude de la forme d'onde numérique, en nombre au minimum égal au produit M du nombre N de valeurs numériques par le quotient d'une fréquence de conversion déterminée $F_c$ par ladite fréquence de défilement $F_d$, ce quotient étant supérieur à 1,

– une opération de filtrage numérique pratiquée sur ces échantillons en fonction dudit choix de fréquences et conduisant au moins à la production de mots numériques filtrés en nombre égal audit nombre minimum M, représentant au moins approximativement, sur au moins deux bits chacun, l'amplitude en fonction du temps de la forme d'onde analogique, et

– une opération de conversion dans laquelle ces mots numériques sont, à ladite fréquence de conversion $F_c$, convertis en un signal analogique constituant au moins approximativement ladite forme d'onde analogique, cette fréquence de conversion $F_c$ étant suffisamment élevée pour être toujours au moins égale au double de ladite fréquence maximale $F_M$ choisie.

De préférence, les mots numériques filtrés contiennent un nombre de bits supérieur au nombre de bits des valeurs numériques initiales.

Dans le cas où lesdites valeurs numériques sont des valeurs binaires, la fréquence de conversion $F_c$ est suffisamment élevée pour être toujours au moins égale au quadruple de la fréquence de défilement $F_d$ choisie.

L'operation de filtrage comprend généralement un filtrage passe-bas, mais peut aussi comprendre l'application, sur les échantillons numériques, d'une distorsion propre à compenser au moins partiellement les déformations introduites dans le traitement des mots numériques par l'opération de conversion.

Avantageusement, le nombre des échantillons numériques produits avant le filtrage est supérieur au nombre de mots numériques convertis au cours de l'opération de conversion. Plus particulièrement, on pourra prévoir que le nombre des échantillons numériques soit un multiple relativement élevé du nombre de mots numériques, par exemple égal à 8 fois le nombre de mots numériques.

Comme le nombre de mots numériques est supérieur au nombre de valeurs numériques initiales, le nombre d'échantillons est lui-même très supérieur à ce nombre de valeurs.

Cette caractéristique est importante pour la raison suivante: la forme d'onde analogique produite doit non seulement présenter une fréquence maximale choisie, mais aussi représenter au mieux la forme d'onde numérique virtuelle initiale. Au niveau du filtre numérique, le contour de la forme d'onde virtuelle n'est connu que par l'intermédiaire des échantillons qui sont fournis à ce filtre. Or on sait que le contour d'une forme d'onde échantillonnée est d'autant mieux connu que le nombre d'échantillons et élevé. Ainsi, la forme d'onde dont le contour correspond aux mots numériques produits par le filtre pourra d'autant mieux rendre compte de la forme d'onde numérique virtuelle initiale que le nombre d'échantillons utilisés pour le filtrage sera élevé.

Le procédé de l'invention peut comporter une opération de mise en mémoire des valeurs numériques et/ou des échantillons, antérieure à l'opération de filtrage numérique et permettant de réaliser ce filtrage en temps différé, l'opération de mise en mémoire des échantillons se substituant alors à l'opération d'échantillonnage telle que décrite précédemment.

De même, le procédé de l'invention peut comporter une opération de mise en mémoire des mots numériques filtrés, postérieure à l'opération de filtrage numérique et permettant de produire plusieurs fois la forme d'onde analogique à partir de ces mots, en n'ayant procédé qu'une seule fois audit filtrage.

De préférence, le procédé de l'invention comporte aussi une opération de lissage du signal analogique résultant de la conversion, permettant d'obtenir, à partir dudit signal analogique, ladite forme d'onde analogique définitive.

Le dispositif de l'invention, destiné à produire, à partir d'une série de N valeurs numériques représentant des paliers successifs d'une forme d'onde numérique virtuelle, une forme d'onde analogique réelle dont l'amplitude au cours du temps corresponde au moins approximativement à celle qu'aurait la forme d'onde virtuelle défilant à une fréquence de défilement $F_d$ donnée, est essentiellement caractérisé en ce qu'il comprend: des moyens d'echantillonnage pour produire, à une fréquence d'echantillonnage $K.F_c$ supérieure à ladite fréquence de défilement, des échantillons numériques représentant de façon surnuméraire lesdites valeurs numériques; un filtre numérique programmable propre à recevoir ces echantillons et à produire, à une fréquence au moins égale à une fréquence de conversion déterminée, des mots numériques à deux bits au moins, représentant l'amplitude au cours du temps de la forme d'onde analogique, rendue susceptible d'être synthétisée dans une bande de fréquence limité par une fréquence maximale $F_M$ au plus égale à la moitié de ladite fréquence de conversion; et un convertisseur numérique-analogique propre à recevoir certains au moins desdits mots numériques et à les convertir à ladite fréquence de conversion déterminée en un signal analogique constituant au moins approximativement ladite forme d'onde analogique.

Lorsque les valeurs numériques à transmettre sont choisies à l'avance, le dispositif comprend de préférence une mémoire contenant ces valeurs et des moyens programmables pour relire ces valeurs numériques à une valeur choisie de la fréquence de défilement $F_d$.

Pour obtenir une restitution aussi fidèle que possible des valeurs numériques, ce dispositif comporte de préférence des moyens d'échantillonnage qui, pour les raisons exposées ci-dessus, fonctionnent à une fréquence d'échantillonnage $K.F_c$ supérieure à la fréquence de conversion $F_c$.

Dans le cas où le filtre numérique produit à se sortie autant de mots qu'il reçoit d'échantillons d'entrée, c'est-à-dire dans le cas où il produit des mots numériques à la fréquence d'échantillonnage, le dispositif de l'invention comporte avanteugeusement à la sortie du filtre un circuit de blocage fournissant au convertisseur numérique analogique, à la fréquence de conversion, des mots numériques sélectionnés de façon régulière parmi les mots produits par le filtre.

De préférence, le convertisseur numérique analogique a une définition, exprimée en nombre de bits, supérieure au nombre de bits desdites valeurs numériques.

En variante, le dispositif de l'invention peut comprendre un ordinateur et un convertisseur numérique analogique de sortie, éventuellement suivis par un filtre analogique de lissage.

Pour faciliter la mise en œuvre du procédé de l'invention, on peut en outre prévoir une mémoire susceptible de recevoir et stocker les mots numériques filtrés produits, par exemple en temps différé, par l'ordinateur et susceptible de les restituer, à la fréquence de conversion réelle précédemment mentionnée, pour commander le convertisseur numérique-analogique de sortie.

Dans ce cas, l'ordinateur peut, au lieu d'être utilisé en temps réel, être seulement utilisé pour simuler, sans contrainte de temps pour lui-même, le fonctionnement qu'aurait un dispositif, tel que décrit précédemment, opérant un échantillonnage à la fréquence réelle précédemment, opérant un échantillonnage à la fréquence réelle $K.F_c$ et un filtrage numérique en temps réel de la forme d'onde numérique initiale; dans ce dernier cas, les mots numériques peuvent être produits sans que la fréquence de l'horloge interne de l'ordinateur intervienne dans la mise en œuvre du procédé de l'invention; en particulier, l'utilisation d'un ordinateur calculant les mots numériques de sortie en temps différé permet, avec un ordinateur de performance modérée, de calculer et stocker dans une mémoire des mots numériques représentant l'amplitude d'une forme d'onde destinée à être reproduite à une fréquence de conversion $F_c$ très élevée, cette reproduction consistant essentiellement à fournir au convertisseur numérique-analogique de sortie les mots relus dans la mémoire à la fréquence de conversion $F_c$.

Un mode particulier de réalisation de l'invention sera décrit ci-après, à titre indicatif et nullement limitatif, en référence aux dessins dans lesquels:

— la figure 1 est un schéma d'un dispositif conforme à l'invention;

— les figures 2a à 2f sont des diagrammes représentant des formes d'onde ou signaux apparaissant en différents points du dispositif de la figure 1; sur ces diagrammes, l'abscisse représente la variable temps t, l'ordonnée VN représente une valeur numérique et l'ordonnée AA représente l'amplitude d'un signal analogique.

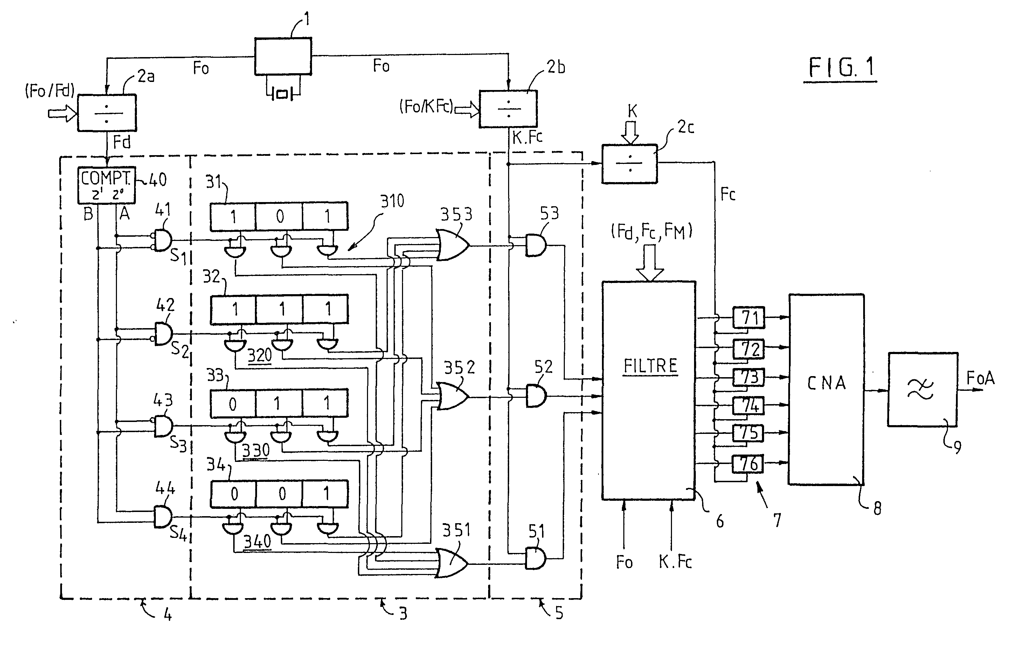

Le dispositif de l'invention, tel que représenté sur la figure 1, sera supposé fonctionner en temps réel. Ce dispositif comporte tout d'abord des circuits permettant de définir au moins une fréquence de défilement $F_d$, une fréquence d'échantillonnage $K.F_c$ et une fréquence de conversion $F_c$, le paramètre K représentant un facteur multiplicatif liant ces deux dernières fréquences.

A cette fin, le dispositif comprend par exemple un oscillateur à quartz 1 produisant un signal d'horloge principal, de fréquence $F_o$ très élevée, et trois diviseurs de fréquence 2a, 2b, 2c recevant, directement ou non, le signal d'horloge $F_o$ et produisant les signaux de fréquence $F_d$, $K.F_c$ et $F_c$. Parmi ces diviseurs de fréquence 2a à 2c, le premier au moins 2a, qui fournit le signal à la fréquence de défilement $F_d$, est un diviseur programmable, grâce auquel cette fréquence peut être choisie.

Une mémoire 3, par exemple de type ROM, contient N valeurs numériques à partir desquelles la forme d'onde analogique doit être synthétisée. Par souci de simplification le dispositif de l'invention sera décrit avec un nombre relativement faible (N=4) de valeurs numériques, étant bien entendu que ce nombre peut être aussi grand que nécessaire.

Ces valeurs numériques peuvent a priori être binaires (c'est-à-dire à 1 bit) ou à plusieurs bits. En l'occurrence sur le schéma de la figure 3, chacune des 4 valeurs a 3 bits et est contenue dans un registre correspondant 31 à 34.

Un compteur d'adresse 4, est prévu à l'entrée de la mémoire 3 pour accéder séquentiellement à chacune des 4 valeurs.

Ce compteur d'adresse 4 comprend par exemple un compteur 40 présentant 2 sorties de signaux binaires A et B, et recevant le signal à la fréquence de défilement $F_d$. Ces sorties sont reliées à des portes logiques 41 à 44 produisant respectivement des signaux combinés $S_1$=NON A ET NON B, $S_2$=A ET NON B, $S_3$=NON A ET B, $S_4$=A ET B.

Les signaux $S_1$ à $S_4$, qui, à tour de rôle, sont au niveau logique haut pendant un intervalle de temps $1/F_d$, sont appliqués à des entrées de portes ET disposées en rangées respectives 310, 320, 330, 340 et affectées aux registres respectifs 31 à 34. L'autre entrée de chacune de ces portes ET reçoit un bit correspondant de la valeur contenue dans le registre auquel cette porte est affectée. Enfin, les sorties des portes recevant le $n^{eme}$ bit de chaque valeur numérique (n=1 à 3 en l'occurrence) sont reliées à une $n^{eme}$ porte OU respective 351, 352, 353.

Il résulte de cet angencement que les portes OU 351 à 353 délivrent en parallèle les 3 bits de l'une des valeurs numériques (101, 111, 011, 001) enregistrées dans la mémoire 3, et que ces valeurs «défilent» à la fréquence $F_d$ choisie par réglage du diviseur 2a.

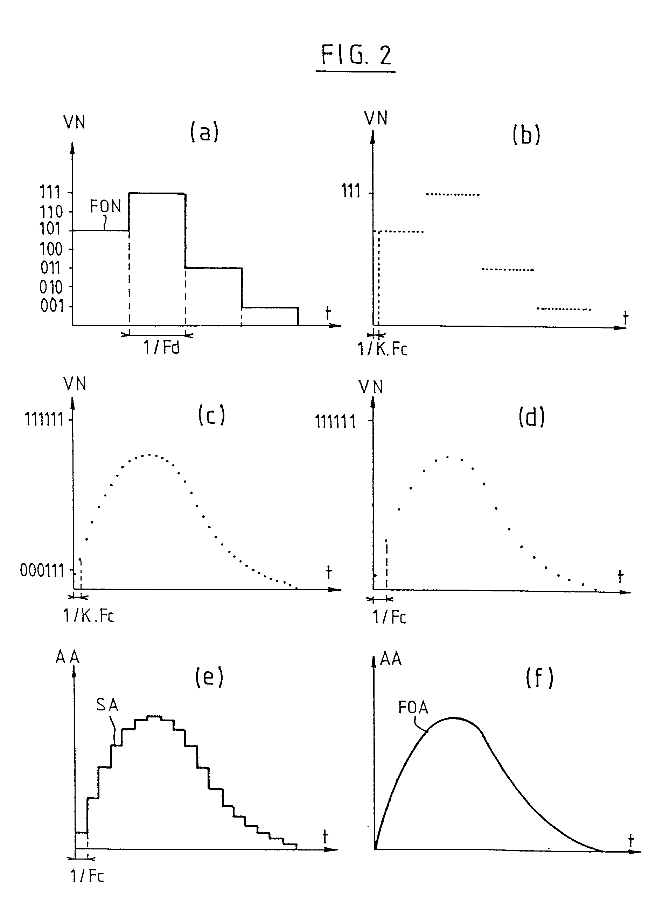

L'état des sorties des portes OU 361 à 353 au cours du temps définit idéalement, c'est-à-dire si l'on considère comme infiniment courts les temps de transition entre les différentes valeurs, la forme d'onde numérique virtuelle FON représentée à la figure 2a et composée de valeurs codées sur 3 bits.

Si la forme d'onde numérique à reproduire était composée de valeurs binaires, et par exemple des bits de gauche des valeurs 101, 111, 011, et 001, les deux cellules de droite de chaque registre 31 à 34 et les portes OU 352 et 353 seraient supprimées.

Le dispositif comprend par ailleurs un circuit d'échantillonnage 5 représenté sous la forme d'un ensemble de 3 portes ET 51 à 53 recevant d'une part les signaux de sortie des portes OU 351 à 353 respectives et d'autre part le signal d'horloge à la fréquence d'échantillonnage $K.F_c$.

Ce circuit d'échantillonnage 5 produit à sa sortie, constituée par les sorties en parallèle des portes ET 51 à 53, des échantillons numériques d'entrée tels que représentés sur la figure 2b.

Ces échantillons, représentatifs de la forme d'onde numérique virtuelle FON, sont produits à la fréquence d'échantillonnage $K.F_c$ de sorte que leur nombre, pour N valeurs numériques (N=4 dans l'exemple choisi) est égal à $N.K.F_c/F_d$.

Le facteur multiplicatif K est choisi au moins égal à 1, c'est-à-dire que le nombre minimum M d'échantillons est égal à $N.F_c/F_d$; par ailleurs le rapport $F_c/F_d$ est choisi supérieur à 1, de sorte que le nombre M d'échantillons est supérieur au nombre N de valeurs initiales.

En outre, il est avantageux de donner à K une valeur entière sensiblement supérieure à 1, par exemple 8; la fréquence d'échantillonnage est alors égale à 8 fois la fréquence de conversion. En effet, on obtient ainsi, grâce au fait que le filtre numérique connaît d'autant mieux la forme d'onde virtuelle que la fréquence d'échantillonnage est élevée, un meilleur rendu de la forme d'onde virtuelle par la forme d'onde analogique.

Ces échantillons (figure 2b) sont, à la fréquence $K.F_c$, admis à l'entrée d'un filtre numérique programmable 6.

Ce filtre, de type connu en soi, reçoit, en tant que signaux d'horloge, les signaux de fréquence $F_o$ et $K.F_c$ et, en tant que données de programmation, des paramètres représentatifs des fréquences de défilement $F_d$, de conversion $F_c$, et maximale $F_M$.

Le signal d'horloge $F_o$, de fréquence élevée par rapport à la fréquence $K.F_c$, constitue le signal d'horloge principal définissant, de façon connue en soi, les instants auxquels les opérations élémentaires du filtre doivent être effectuées, tandis que le signal à la fréquence $K.F_c$ définit pour le filtre, de façon également connue en soi, les instants auxquels les échantillons sont disponibles à l'entrée de ce filtre.

Si elle est fixée une fois pour toutes, comme ce sera généralement le cas, la fréquence de conversion $F_c$ pourra être fournie au filtre sous la forme d'un paramètre définitif (non réglable).

A partir de ces signaux et paramètres, le filtre 6 élabore, de façon connue en soi, des mots numériques (figure 2c) codés sur un nombre de bits supérieur au nombre de bits des valeurs numériques initiales et représentant au moins approximativement le contour de la forme d'onde analogique filtrée dont le spectre de fréquence est limité par la fréquence maximum $F_M$.

Ce filtre numérique 6 réalise donc au moins un filtrage passe-bas destiné à limiter la bande de fréquence de la forme d'onde analogique; les mots numériques de sortie du filtre, en nombre en principe égal au nombre d'échantillons si le filtre 6 est d'un type classique, sont fournis à un registre bloqueur 7 constitué par une pile de 6 registres à décalage 71 à 76 recevant chacun un bit du mot de sortie du filtre.

L'accès à ces registres (limités à un bit chacun par exemple) est commandé par la signal de fréquence $F_c$, de sorte que le registre bloqueur 7 délivre à sa sortie, à la fréquence de conversion $F_c$ (figure 2d), des mots numériques filtrés dont le nombre M, pour N valeurs numériques initiales, est égal à $N.F_c/F_d$.

Ces mots sont transmis à un convertisseur numérique-analogique 8 qui en produit un signal analogique (figure 2e) proche de la forme d'onde analogique souhaitée FOA.

Celle-ci peut en fait être obtenue (figure 2f), avec des qualités spectrales meilleures que celles du signal analogique de la figure 2e, au moyen d'un filtre analogique de lissage 9 disposé à la sortie du convertisseur numérique-analogique 8. Ce filtre de lissage 9 présente par exemple une fréquence de coupure égale à la moitié de la fréquence de conversion $F_c$.

Bien que le filtre de lissage 9 modifie le spectre de fréquence du signal analogique SA, l'homme de l'art comprendra que la fonction de ce filtre n'est pas équivalente à celle du filtre analogique de limitation de bande utilisé dans l'art antérieur mentionné ci-dessus. En effet, le filtre de lissage 9 n'a pour fonction que d'éliminer la raie de fréquence $F_c$ apparaissant dans le spectre du signal SA en raison de la définition «en marches d'escalier» de ce signal. Cependant, cette raie à la fréquence $F_c$ ne présente qu'une amplitude relativement faible par rapport aux autres composantes du spectre du signal SA en raison du fait que les mots numériques sont codés sur plusieurs bits. Ainsi, d'une part la bande de fréquence de la forme d'onde analogique FAO est déterminée pratiquement exclusivement par l'action du filtre numérique programmable 6, et d'autre part le filtre de lissage 9 n'a besoin que d'être adapté à la fréquence de conversion $F_c$, qui dans la pratique est choisie une fois pour toutes, et non pas à la fréquence maximal $F_M$.

Le registre bloqueur 7, le convertisseur numérique-analogique 8 et le filtre de lissage 9 introduisent, sur les mots numériques en sortie du filtre 6, des déformations, qui peuvent être mesurées suivant des techniques connues et qui se traduisent concrètement par le fait que pour une même échelle, la forme d'onde de la figure 2f ne suit pas exactement le contour donné par l'ensemble de points de la figure 2d. En d'autres termes, les éléments 7, 8 et 9 ont ensemble une fonction de transfert H, que l'on peut mesurer, et qui est responsable de distorsions. Selon l'invention, ces distorsions peuvent être compensées en appliquant sur les échantillons, au niveau du filtre numérique 6, des distorsions correspondant à la fonction de transfert $H^{-1}$ et qui compensent les distorsion introduites par les éléments 7, 8, et 9.

Il est également possible, selon l'invention, d'introduire de façon délibérée des distorsions déterminées dans la forme d'onde analogique. Ce procédé permet par exemple, si la forme d'onde analogique est un signal de test, d'oberserver à la réception de quelle façon la distorsion quantifiée du signal de test émis a été transmise.

L'invention décrite permet, en ayant choisi initialement une fréquence de conversion $F_c$ et une fréquence maximale $F_M$ au plus égale à la moitié de la fréquence de conversion $F_c$, de choisir la fréquence de défilement $F_d$ dans une certaine gamme, sans avoir à modifier physiquement le dispositif de la figure 1. On obtient ainsi la possibilité d'appliquer à la forme d'onde analogique FOA une anamorphose temporelle dont les caractéristiques sont programmées dans ce dispositif.

Lorsque la forme d'onde numérique FON est représenté par des valeurs binaires, la fréquence de défilement $F_d$ peut au plus être égale à la moitié de la fréquence maximale $F_M$, donc au plus égale au quart de la fréquence de conversion $F_c$.

Les mots filtrés issus du registre bloqueur 7 peuvent être stockés dans une mémoire (non représentée) de manière à pouvoir être utilisés ultérieurement pour commander un convertisseur numérique-analogique 8 à la fréquence de conversion $F_c$, comme le fait directement le registre bloqueur 7 sur la figure 1, cette fréquence $F_c$ pouvant alors être indépendante de la fréquence de sortie du filtre numérique 7.

D'autre part le dispositif de l'invention, à l'exception du convertisseur 8 et du filtre de lissage 9, peut être essentiellement constitué par un ordinateur. Cet ordinateur peut être utilisé pour mettre en œuvre le procédé de l'invention soit en temps réel comme le fait le dispositif de la figure 1, soit en temps différé. Dans ce dernier cas, comme cela apparaîtra clairement à l'homme de l'art, l'ordinateur est programmé pour simuler le fonctionnement du dispositif de la figure 1.

### Revendications

1. Procédé pour produire, à partir d'une série de N valeurs numériques représentant des paliers successifs d'une forme d'onde numérique virtuelle (FON), et dans une bande de fréquence limitée par une fréquence maximale $F_M$, une forme d'onde analogique réelle (FOA) dont l'amplitude au cours du temps corresponde au moins approximativement à celle qu'aurait la forme d'onde virtuelle défilant à une fréquence de défilement $F_d$ donnée, caractérisé en ce que, pour permettre un choix de la fréquence de défilement $F_d$ et de la fréquence maximale $F_M$ du spectre de fréquences de la forme d'onde analogique, ce procédé comprend:

– une opération préliminaire d'échantillonnage consistant à produire des échantillons numériques d'entrée, représentatifs de l'amplitude de la forme d'onde numérique, en nombre au minimum égal au produit M du nombre N de valeurs numériques par le quotient d'une fréquence de conversion déterminée $F_c$ par ladite fréquence de défilement $F_d$, ce quotient étant supérieur à 1,

– une opération de filtrage numérique pratiquée sur ces échantillons en fonction dudit choix de fréquences et conduisant au moins à la production de mots numériques filtrés en nombre égal audit nombre minimum M, représentant au moins approximativement, sur au moins deux bits chacun, l'amplitude en fonction du temps de la forme d'onde analogique, et

– une opération de conversion dans laquelle ces mots numériques sont, à ladite fréquence de conversion $F_c$, convertis en un signal analogique constituant au moins approximativement ladite forme d'onde analogique, cette fréquence de conversion $F_c$ étant suffisamment élevée pour être toujours au moins égale au double de ladite fréquence maximale $F_M$ choisie.

2. Procédé suivant la revendication 1, caractérisé en ce que lesdits mots numériques filtres contiennent un nombre de bits supérieur au nombre de bits des valeurs numériques initiales.

3. Procédé suivant la revendication 1 ou 2, caractérisé en ce que lesdits valeurs numériques sont des valeurs binaires et en ce que la fréquence de conversion $F_c$ est suffisamment élevée pour être toujours au moins égale au quadruple de la fréquence de défilement $F_d$ choisie.

4. Procédé suivant l'une quelconque des revendications précédentes, caractérisé en ce que ladite opération de filtrage numérique comprend essentiellement un filtrage passe-bas.

5. Procédé suivant l'une quelconque des revendications précédentes, caractérisé en ce que le nombre des échantillons numériques produits avant le filtrage est supérieur au nombre de mots numériques convertis au cours de l'opération de conversion.

6. Procédé suivant l'une quelconque des revendications précédentes, caractérisé en ce qu'il comporte une opération de mise en mémoire des valeurs numériques et/ou des échantillons, antérieure à l'opération de filtrage numérique et permettant de réaliser ce filtrage en temps différé, l'opération de mise en mémoire des échantillons se substituant à ladite opération d'échantillonnage.

7. Procédé suivant l'une quelconque des revendications précédentes, caractérisé en ce qu'il comporte une opération de mise en mémoire des mots numériques filtrés, postérieure à l'opération de filtrage numérique et permettant de produire plusieurs fois ladite forme d'onde analogique à partir de ces mots, en n'ayant procédé qu'une seule fois audit filtrage.

8. Procédé suivant l'une quelconque des revendications précédentes, caractérisé en ce que l'opération de filtrage comprend l'application, sur lesdits échantillons, d'une distorsion propre à compenser au moins partiellement les déformations introduites dans le traitement desdits mots numériques par l'opération de conversion.

9. Procédé suivant l'une quelconque des revendications précédentes, caractérisé en ce qu'il comporte une opération de lissage du signal analogique résultant de la conversion, permettant d'obtenir, à partir dudit signal analogique, ladite forme d'onde analogique.

10. Dispositif pour produire, à partir d'une série de N valeurs numériques représentant des paliers successifs d'une forme d'onde numérique virtuelle (FON), une forme d'onde analogique réelle (FOA) dont l'amplitude au cours du temps corresponde au moins approximativement à celle qu'aurait la forme d'onde qu'aurait la forme d'onde virtuelle défilant à une fréquence de défilement $F_d$ donnée, caractérisé en ce qu'il comprend: des moyens d'échantillonnage (5) pour produire, à une fréquence d'échantillonnage $K.F_c$ supérieure à ladite fréquence de défilement, des échantillons numériques représentant de façon surnuméraire lesdites valeurs numériques; un filtre numérique programmable (6) susceptible de recevoir ces échantillons et de produire, à une fréquence au moins égale à une fréquence de conversion $F_c$ déterminée, des mots numériques à deux bits au moins, représentant au moins approximativement le contour de la forme d'onde analogique propre à être synthétisée dans une bande de fréquence limitée par une fréquence maximale $F_M$ au plus égale à la moitié de ladite fréquence de conversion $F_c$; et un convertisseur numérique-analogique (8) propre à recevoir certains au moins desdits mots numériques et à les convertir à ladite fréquence de conversion déterminée en un signal analogique (SA) constituant au moins approximativement ladite forme d'onde analogique.

11. Dispositif suivant la revendication 10, caractérisé en ce qu'il comporte une mémoire (3) contenant les valeurs numériques et des moyens programmables (2a, 4) pour relire ces valeurs numériques à une valeur choisie de la fréquence de défilement $F_d$.

12. Dispositif suivant la revendication 10 ou 11, caractérisé en ce que les moyens d'échantillonnage (5) fonctionnent à une fréquence d'échantillonnage $K.F_c$ supérieure à la fréquence de conversion $F_c$.

13. Dispositif suivant la revendication 12, caractérisé en ce que le filtre numérique (6) produit à sa sortie des mots numériques à la fréquence d'échantillonnage et en ce que ce dispositif comporte à la sortie du filtre un circuit de blocage (7) fournissant au convertisseur numérique analogique, à la fréquence de conversion $F_c$, des mots numériques sélectionnés de façon régulière parmi les mots produits par le filtre.

14. Dispositif suivant l'une quelconque des revendications 10 à 13, caractérisé en ce que le convertisseur numérique analogique a une définition, exprimée en nombre de bits, supérieure au nombre de bits desdites valeurs numériques.

15. Application d'un ordinateur à la mise en œuvre du procédé suivant l'une quelconque des revendications 1 à 9.

## Patentansprüche

1. Verfahren zum Erzeugen, ausgehend von einer Serie von N numerischen Werten, die aufeinanderfolgende Stufen einer virtuellen numerischen Wellenform (FON) repräsentieren, und in einem durch eine Maximalfrequenz $F_M$ begrenzten Frequenzband, einer reellen analogen Wellenform (FOA), deren Amplitude im Zeitablauf mindestens annähernd jener entspricht, die die virtuelle Wellenform beim Durchlauf mit einer gegebenen Durchlauffrequenz $F_d$ hätte, dadurch gekennzeichnet, daß zum Ermöglichen einer Wahl der Durchlauffrequenz $F_d$ und der Maximalfrequenz $F_M$ des Spektrums der Frequenzen der analogen Wellenform dieses Verfahren umfaßt:

– Eine vorangehende Abtastoperation, bestehend in der Erzeugung von numerischen Eingangsabtastwerten, repräsentativ für die Amplitude der numerischen Wellenform mit einer Anzahl, die mindestens gleich ist dem Produkt M der Anzahl N der numerischen Werte mal dem Quotienten einer vorbestimmten Umsetzfrequenz $F_c$ durch die genannte Durchlauffrequenz $F_d$, wobei dieser Quotient größer ist als 1,

– eine numerische Filterung, ausgeübt auf diese Abtastmuster in Funktion der genannten Wahl der Frequenzen, was zu der Erzeugung zumindest von gefilterten numerischen Worten in einer Anzahl gleich der genannten Minimumanzahl M führt, welche mindestens annähernd jeweils auf mindestens zwei Bit die Amplitude in Abhängigkeit von der Zeit der analogen Wellenform repräsentieren, und

– eine Umsetzoperation, in welcher diese numerischen Worte mit der genannten Umsetzfrequenz $F_c$ in ein analoges Signal umgesetzt werden, das zumindest annähernd die genannte analoge Wellenform repräsentiert, wobei diese Umsetzfrequenz $F_c$ hinreichend hoch ist, um immer mindestens gleich dem Doppelten der genannten gewählten Maximalfrequenz $F_M$ zu sein.

2. Verfahren nach Anspruch 1, dadurch gekennzeichnet, daß die genannten gefilterten numerischen Worte eine Anzahl von Bits enthalten, die größer ist als die Anzahl von Bits der ursprünglichen numerischen Werte.

3. Verfahren nach Anspruch 1 oder 2, dadurch gekennzeichnet, daß die genannten numerischen Werte binäre Werte sind und daß die Umsetzfrequenz $F_c$ hinreichend hoch ist, um immer mindestens gleich dem Vierfachen der gewählten Durchlauffrequenz $F_d$ zu sein.

4. Verfahren nach einem der vorangehenden Ansprüche, dadurch gekennzeichnet, daß die genannte numerische Filteroperation im wesentlichen eine Tiefpaßfilterung umfaßt.

5. Verfahren nach einem der vorangehenden Ansprüche, dadurch gekennzeichnet, daß die Anzahl der erzeugten numerischen Abtastmuster vor der Filterung größer ist als die Anzahl der während der Umsetzoperation umgesetzten numerischen Worte.

6. Verfahren nach einem der vorangehenden Ansprüche, dadurch gekennzeichnet, daß es eine Abspeicherungsoperation der numerischen Werte und/oder der Abtastmuster umfaßt vor der numerischen Filterungsoperation, und was es ermöglicht, diese Filterung zeitversetzt durchzuführen, wobei die Abspeicherungsoperation der Abtastmuster die Erzeugung der Abtastmuster ersetzt.

7. Verfahren nach einem der vorangehenden Ansprüche, dadurch gekennzeichnet, daß es eine Abspeicherungsoperation der gefilterten numerischen Worte nach der numerischen Filterungsoperation umfaßt, was es ermöglicht, mehrmals die genannte analoge Wellenform ausgehend von diesen Worten zu erzeugen, während nur ein einziges Mal die Filterung durchzuführen ist.

8. Verfahren nach einem der vorangehenden Ansprüche, dadurch gekennzeichnet, daß die Filterungsoperation die Anwendung einer Verzerrung auf die genannten Abtastmuster umfaßt, geeignet zur mindestens teilweisen Kompensation von Deformationen, eingeführt in die Verarbeitung der genannten numerischen Worte durch die Umsetzoperation.

9. Verfahren nach einem der vorangehenden Ansprüche, dadurch gekennzeichnet, daß es eine Glättungsoperation des aus der Umsetzung resultierenden Analogisignals umfaßt, was es ermöglicht, ausgehend von dem genannten Analogsignal die genannte analoge Wellenform zu erhalten.

10. Anordnung zum Erzeugen, ausgehend von einer Serie von N numerischen Werten, die aufeinander folgende Stufen einer virtuellen numerischen Wellenform (FON) repräsentieren, einer reellen analogen Wellenform (FOA), deren Amplitude im Zeitablauf mindestens annähernd derjenigen entspricht, die die virtuelle Wellenform beim Durchlauf mit einer gegebenen Durchlauffrequenz $F_d$ hätte, dadurch gekennzeichnet, daß sie umfaßt: Abtastmittel (5) zum Erzeugen, mit einer Abtastfrequenz $K.F_c$, die größer ist als die genannte Durchlauffrequenz, von numerischen Abtastmustern, die in Überzahlform die genannten numerischen Werte repräsentieren; ein programmierbares numerisches Filter (6), angeschlossen zum Empfang der Abtastmuster für das Erzeugen mit einer Frequenz, die mindestens gleich einer vorbestimmten Umsetzfrequenz $F_c$ ist, von numerischen Worten mit mindestens zwei Bit, die mindestens annähernd die Kontur der analogen Wellenform selbst repräsentieren, die in einem durch eine Maximalfrequenz $F_M$, die höchstens gleich der Hälfte der genannten Umsetzfrequenz $F_c$ ist, begrenzten Frequenzband zu synthetisieren ist, und einen numerisch analogen Umsetzer (8), angeschlossen zum Emfpang mindestens bestimmter der numerischen Worte, um sie mit der genannten vorbestimmten Umsetzfrequenz in ein Analogsignal (SA) umzusetzen, das mindestens annähernd die genannte analoge Wellenform bildet.

11. Anordnung nach Anspruch 10, dadurch gekennzeichnet, daß sie einen Speicher (3) umfaßt, der die numerischen Werte hält, sowie programmierbare Mittel (2a, 4) für das Auslesen dieser numerischen Werte mit einem gewählten Wert der Durchlauffrequenz $F_d$.

12. Anordnung nach Anspruch 10 oder 11, dadurch gekennzeichnet, daß die Abtastmittel (5) mit einer Abtastfrequenz $K.F_c$ arbeitet, die größer ist als die Umsetzfrequenz $F_c$.

13. Anordnung nach Anspruch 12, dadurch gekennzeichnet, daß das numerische Filter (6) an seinem Ausgang numerische Worte mit der Abtastfrequenz erzeugt, und daß die Anordnung am Ausgang des Filters einen Blockierschaltkreis (7) umfaßt, der dem numerisch analogen Umsetzer mit der Umsetzfrequenz $F_c$ in regelmäßiger Weise ausgewählte numerische Worte aus den von dem Filter erzeugten Worten zuführt.

14. Anordnung nach einem der Ansprüche 10 bis 13, dadurch gekennzeichnet, daß der numerisch analoge Umsetzer eine Auflösung, ausgedrückt in der Bit-Anzahl aufweist, die größer ist als die Anzahl der Bits der genannten numerischen Werte.

15. Anwendung einer Datenverarbeitungsanlage für die Durchführung des Verfahrens nach einem der Ansprüche 1 bis 9.

**Claims**

1. A method of producing a real analog waveform (FOA) from a series of N digital values representing successive increments of a virtual digital waveform (FON), in a frequency band limited by a maximum frequency $F_M$, the amplitude of the real analog waveform in the course of time corresponding at least approximately to the amplitude with the virtual waveform travelling at a given frequency $F_d$ would have, characterised in that, to allow for choice of the travelling frequency $F_d$ and the maximum frequency $F_M$ of the frequency spectrum of the analog waveform, the method comprises:
 – a preliminary sampling operation comprising producing digital input samples, representing the amplitude of the digital waveform, at least equal in number to the product M of the number N of digital values and the quotient of a conversion frequency $F_c$ determined by said travelling frequency $F_d$, the quotient being greater than 1,
 – a digital filtering operation carried out on the samples as a function of said choice of frequencies and leading at least to the production of filtered digital words equal in number to said minimum number M, and each at least approximately representing the amplitude of the analog waveform as a function of time, on at least two bits each, and
 – a conversion operation wherein the digital words are converted at the conversion frequency $F_c$ to an analog signal at least approximately comprising said analog waveform, the conversion frequency $F_c$ being high enough always to be at least twice the chosen maximum frequency $F_M$.

2. The method of claim 1, characterised in that the filtered digital words contain a number of bits greater than the numer of bits for the initial digital values.

3. The method of claim 1 or 2, characterised in that said digital values are binary values, and that the conversion frequency $F_c$ is high enough always to be at least four times the selected travelling frequency $F_d$.

4. The method of any of the preceding claims, characterised in that the digital filtering operation essentially comprises low pass filtering.

5. The method of any of the preceding claims, characterised in that the number of digital samples produced before filtering is greater than the number of digital words converted in the conversion operation.

6. The method of any of the preceding claims, characterised in that it comprises an operation of storing the digital values and/or samples prior to the digital filtering operation, enabling filtering to be carried out with a time lag, the sample storing operation replacing the sampling operation.

7. The method of any of the preceding claims, characterised in that it comprises an operation of storing the filtered digital words after the digital filtering operation, enabling said analog waveform to be produced from those words a plurality of times although filtering was only carried out once.

8. The method of any of the preceding claims, characterised in that the filtering operation comprises distorting said samples, the distortion compensating at least partially for the deformation brought about in the processing of the digital words by the conversion operation.

9. The method of any of the preceding claims, characterised in that it comprises an operation of smoothing the analog signal resulting from conversion, enabling said analog waveform to be obtained from said analog signal.

10. Apparatus for producing a real analog waveform (FOA) from a series of N digital values representing successive increments of a virtual digital waveform (FON), the amplitude of the real analog waveform in the course of time corresponding at least approximately to the amplitude which the virtual waveform travelling at a given frequency $F_d$ would have, characterised in that it comprises: sampling means (5) to produce digital samples representing said digital values in a supernumerary way, at a sampling frequency $K.F_c$ higher than said travelling frequency; a programmable digital filter (6) adapted to receive the samples and to produce digital words of at least two bits at a frequency at least equal to a given conversion frequency $F_c$, the digital words at least approximately representing the outline of the analog waveform suitable for synthesisation within a frequency band limited by a maximum frequency $F_M$ equal to no more than half said conversion frequency $F_c$; and a digital-analog converter (8) adapted to receive at least some of said digital words and to convert them to an analog signal (SA) at least approximately comprising said analog waveform, at said given conversion frequency.

11. The apparatus of claim 10, characterised in that it comprises a memory (3) containing the digital values and programmable means (2a, 4) for rereading the digital values at a selected level of the travelling frequency $F_d$.

12. The apparatus of claim 10 or 11, characterised in that the sampling means (5) operate at a sampling frequency $K.F_c$ higher than the conversion frequency $F_c$.

13. The apparatus of claim 12, characterised in that the digital filter (6) produces digital words at the sampling frequency at its output, that the apparatus comprises a locking circuit (7) at the filter output, that the locking circuit supplies digital words to the digital-analog converter at the conversion frequency $F_c$, and that the digital words are selected regularly from the words produced by the filter.

14. The apparatus of any of claims 10 to 13, characterised in that the digital-analog converter has a definition, expressed as the number of bits, which is higher than the number of bits in said digital values.

15. The application of a computer to carrying out the method of any of claims 1 to 9.

FIG.1

# FIG. 2